# EUROPEAN PATENT APPLICATION

(11) **EP 4 606 627 A1**
(43) Date of publication of application: **27.08.2025**
(21) Application number: 25150325.6
(22) Date of filing: 06.01.2025
(51) Int. Cl.: B60L 50/64, B60L 53/80

(54) **POWER SUPPLY DEVICE**

(30) Priority: 21.02.2024 JP 2024024541
(71) Applicant: TOYOTA JIDOSHA KABUSHIKI KAISHA, Aichi-ken, 471-8571 (JP)
(72) Inventor: KIMURA, Masaru, Toyota-shi, 471-8571 (JP)
(74) Representative: D Young & Co LLP

(57) **Abstract**

A battery unit (200) includes: a connecting portion (204) electrically connectable to an electrical apparatus (100) in which the battery unit (200) is mounted; a cell (208) that allows supply of electric power to the electrical apparatus (100); a relay (CR1-1) that switches between a conductive state in which a power supply line between the connecting portion (204) and the cell (208) is electrically connected and an interrupt state in which the power supply line is electrically interrupted; a first notification device (212) that operates, when being supplied with electric power, to allow an operating state to be recognized from outside; and a first supply source (214) that supplies electric power to the first notification device (212) when the first supply source (214) is connected to the first notification device (212) and the relay (CR1-1) is in the conductive state.

## Description

### CROSS REFERENCE TO RELATED APPLICATIONS

This nonprovisional application is based on Japanese Patent Application No. 2024-024541 filed on February 21, 2024 with the Japan Patent Office, the entire contents of which are hereby incorporated by reference.

### BACKGROUND

### Field

The present disclosure relates to a power supply device detachable from an electrical apparatus.

### Description of the Background Art

An electrically powered vehicle is well known in which a power supply device including a changeable battery or the like is mounted. For example, Japanese Patent Laying-Open No. 2022-034842 discloses a changeable power supply device including a relay provided in each of the positive and negative power supply lines between the battery and a portion connected with the vehicle.

### SUMMARY

The power supply device as described above requires the determination of the presence or absence of welding while a plurality of relays are being disconnected. When the determination of the presence or absence of welding is performed on the apparatus side (e.g., on the electrically powered vehicle side) in which the power supply device is mounted, however, if the power supply device is removed from the apparatus, a determination result is not associated with the removed power supply device, and accordingly, the determination as to whether or not welding has occurred at a destination may be required. As a result, the number of relay operations may increase.

An object of the present disclosure is to provide a power supply device that can determine the presence or absence of welding of a relay even when the power supply device is removed from an apparatus in which the power supply device is mounted.

A power supply device according to an aspect of the present disclosure includes: a connecting portion electrically connectable to an electrical apparatus in which the power supply device is mounted; a power storage device that allows supply of electric power to the electrical apparatus; a relay that switches between a conductive state in which a power supply line between the connecting portion and the power storage device is electrically connected and an interrupt state in which the power supply line is electrically interrupted; a notification device that operates, when being supplied with electric power, to allow the conductive state to be recognized from outside; and a supply source that supplies electric power to the notification device when the supply source is connected to the notification device and the relay is in the conductive state.

Thus, when the power supply device is removed from the electrical apparatus in which the power supply device is mounted and when the relay is controlled to enter the interrupt state, it can be determined that the relay has been welded if the notification device is operating to allow the operating state to be recognized from outside using electric power of the supply source. Thus, whether welding of the relay has occurred can be determined with high accuracy even when the power supply device is removed from the apparatus in which the power supply device is mounted.

In an embodiment, the notification device and the supply source are connected in parallel with the relay with respect to the power supply line. When the relay is in the conductive state, the notification device, the supply source, and the relay form a closed circuit, and the supply source supplies electric power to the notification device.

Thus, when the power supply device is removed from the electrical apparatus in which the power supply device is mounted and when the relay is controlled to enter the interrupt state, it can be determined that the relay has been welded if the notification device is operating to allow the operating state to be recognized from outside using electric power of the supply source.

In another embodiment, the notification device includes a light emitting device that emits light in the conductive state.

Thus, when the light emitting device is emitting light with the power supply device removed from the apparatus in which the power supply device is mounted, it can be determined with high accuracy that the relay has been welded.

In still another embodiment, the notification device includes a sound generating device that generates a sound in the conductive state.

Thus, when a sound has been generated by the sound generating device with the power supply device removed from the apparatus in which the power supply device is mounted, it can be determined with high accuracy that the relay has been welded.

The foregoing and other objects, features, aspects and advantages of the present disclosure will become more apparent from the following detailed description of the present disclosure when taken in conjunction with the accompanying drawings.

### BRIEF DESCRIPTION OF THE DRAWINGS

Fig. 1 shows an example configuration of a battery change system.
Fig. 2 shows an example configuration of a battery unit.
Fig. 3 is a diagram for illustrating the connection relationship between a vehicle and the battery unit.
Fig. 4 is a diagram for illustrating an example configuration of a power system of the vehicle.
Fig. 5 is a timing chart showing an example method of determining welding of each relay.
Fig. 6 is a timing chart showing another example method of determining welding of each relay.
Fig. 7 shows an example configuration of the battery unit, which is a power supply device according to the present embodiment.
Fig. 8 shows an example configuration of a battery unit, which is a power supply device according to a modification.

### DESCRIPTION OF THE PREFERRED EMBODIMENTS

Embodiments of the present disclosure will be described below in detail with reference to the drawings. The same or corresponding portions in the drawings are denoted by the same reference characters, and description thereof will not be repeated.

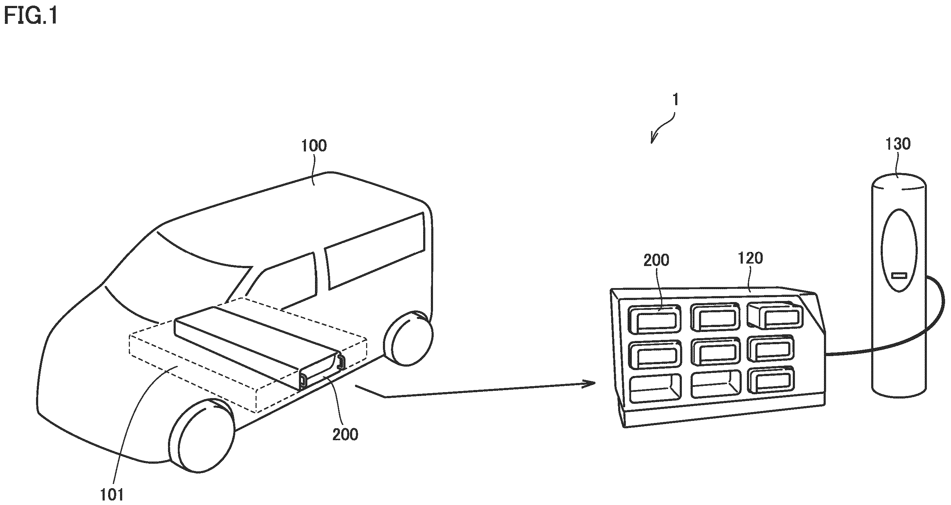

An example battery change system including a power supply device according to the present embodiment will be described below. Fig. 1 shows an example configuration of the battery change system. As shown in Fig. 1, battery change system 1 includes a vehicle 100, a charging rack 120, and a charging stand 130.

Vehicle 100 is configured to allow a plurality of battery units of rectangular parallelepiped shape, including a battery unit 200, to be detachable in a housing space 101. Fig. 1 shows, as an example, a case in which vehicle 100 is configured so as to mount therein three battery units and one battery unit 200 is mounted in vehicle 100, but the upper limit number of mounted battery units is not particularly limited to three. Vehicle 100 includes, for example, an electrically powered vehicle such as a battery electric vehicle or a hybrid electric vehicle.

Charging rack 120 is configured to so as to mount therein a plurality of battery units. Fig. 1 shows, as an example, a case in which the charging rack is configured so as to mount therein nine battery units and seven battery units including battery unit 200 are mounted in the charging rack.

Charging rack 120 charges at least any of the housed battery units using electric power supplied from charging stand 130. Charging rack 120 may charge a plurality of housed battery units one by one in a prescribed order, charge the plurality of housed battery units or some of the housed battery units in parallel, or charge a battery unit specified by charging stand 130. Charging rack 120 may charge the housed battery units when the battery units are housed, or charge the housed battery units upon receipt of a request from charging stand 130 to start charging.

Charging stand 130 is configured to provide electric power to charging rack 120. For example, charging stand 130 may transmit, to charging rack 120, information specifying a battery unit to be charged among the plurality of battery units housed in charging rack 120.

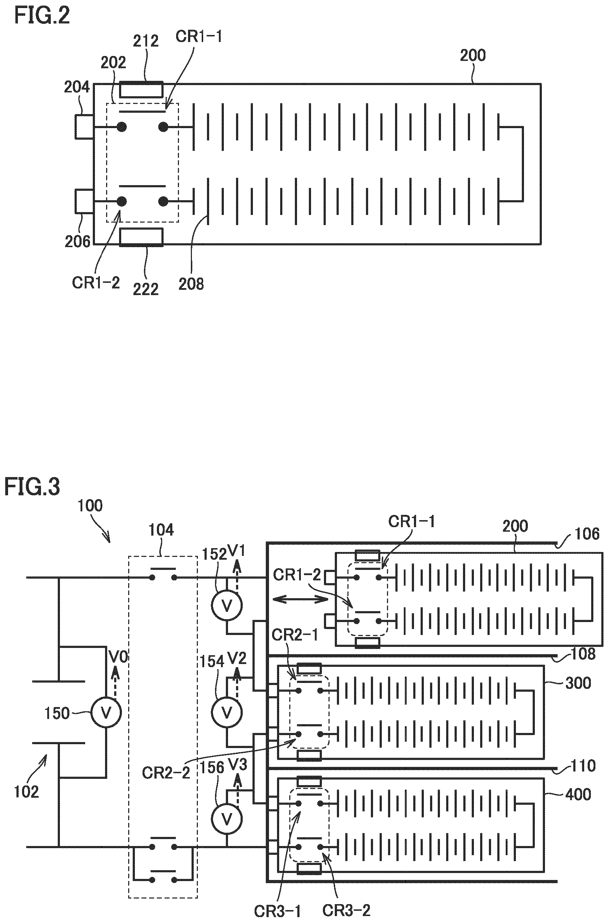

Fig. 2 shows an example configuration of battery unit 200. As shown in Fig. 2, battery unit 200 includes a relay circuit 202, a positive connector 204, a negative connector 206, a plurality of cells 208, a first notification device 212, and a second notification device 222.

Relay circuit 202 includes a relay CR1-1 connected to a positive power supply line and a relay CR1-2 connected to a negative power supply line.

Cells 208 are configured by series connection of a prescribed number of (22 in Fig. 2) cells 208. It suffices that cell 208 is, for example, a rechargeable energy storage device, which may be, for example, a nickel-metal hydride battery or include a secondary battery such as lithium ion battery with a liquid or solid electrolyte. Cell 208 may be a capacitor.

Positive connector 204 and negative connector 206 are configured to be connectable to a connector provided in housing space 101 for battery unit 200 in vehicle 100. Positive connector 204 and negative connector 206 correspond to a connecting portion electrically connected to vehicle 100 that is an electrical apparatus in which battery unit 200 is mounted. The detailed configurations of first notification device 212 and second notification device 222 will be described later.

The housing of battery unit 200 shown in Fig. 2 is configured so as to be housed in housing space 101 of battery unit 200 provided in vehicle 100.

Fig. 3 is a diagram for illustrating the connection relationship between vehicle 100 and battery unit 200. As shown in Fig. 3, housing portions 106, 108, 110 are set in housing space 101 of vehicle 100. Three battery units 200, 300, 400 are housed in housing portions 106, 108, 110, respectively. Each of housing portions 106, 108, 110 is set such that the longitudinal direction is aligned with the right-left direction of vehicle 100. Housing portions 106, 108, 110 are arranged along the front-rear direction of vehicle 100. At one end of housing portion 106 in the longitudinal direction, two connection connectors (not shown) are provided that are respectively connectable to positive connector 204 and negative connector 206 of battery unit 200. The other end of housing portion 106 in the longitudinal direction is provided with an opening configured to allow insertion of battery unit 200. Battery unit 200 is inserted into the opening of housing portion 106 with the side on which positive connector 204 and negative connector 206 are provided, for example, as the leading edge, and when the position is fixed by, for example, providing a lid on the opening, positive connector 204 and negative connector 206 are connected to the two connection connectors provided in housing portion 106. When positive connector 204 and negative connector 206 are connected to the two connection connectors, the contacts inside the connectors are brought into contact with each other to be electrically conductive.

Housing portions 108, 110 have the same structure as that of housing portion 106, and detailed description thereof will not be repeated. When battery units 300, 400 are inserted into housing portions 108, 110, respectively, and their positions are fixed as described above, the connector on the vehicle 100 side and the connector on the battery unit side are connected to be electrically conductive.

When three battery units 200, 300, 400 are housed in housing portions 106, 108, 110, respectively, the positive connector of battery unit 200 is electrically connected to the positive power supply line of the power supply system of vehicle 100, and the negative connector of battery unit 200 is electrically connected to the positive connector of battery unit 300. Furthermore, the negative connector of battery unit 300 is electrically connected to the positive connector of battery unit 400, and the negative connector of battery unit 400 is electrically connected to the negative power supply line of the power supply system of vehicle 100. As a result, three battery units, which are connected in series, are connected to the power supply system of vehicle 100.

The power supply system of vehicle 100 includes a capacitor 102 included in a power control unit (PCU) (not shown), a system main relay (SMR) 104, and voltage sensors 150, 152, 154, 156.

SMR 104 is formed of a relay provided in each of the positive power supply line and the negative power supply line. The negative power supply line is further connected in parallel with a pre-charging relay including a resistive element (not shown) connected in series with the above-mentioned relay.

Voltage sensor 150 detects a voltage V0 between the ends of capacitor 102. Voltage sensor 152 detects a voltage V1 between the terminals of battery unit 200. Voltage sensor 154 detects a voltage V2 between the terminals of battery unit 300. Voltage sensor 156 detects a voltage V3 between the terminals of battery unit 400.

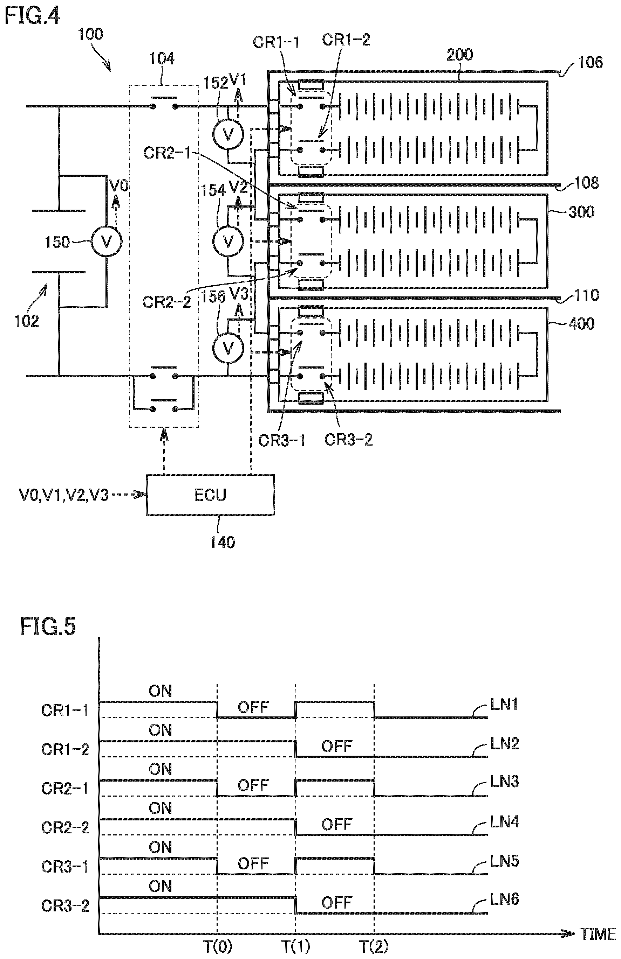

Fig. 4 is a diagram for illustrating an example configuration of the power supply system of vehicle 100. As shown in Fig. 4, the power supply system further includes an electronic control unit (ECU) 140. ECU 140 uses the PCU to convert a direct-current (DC) power supply composed of the three battery units into alternate-current (AC) power and supply it to a load (e.g., a motor generator) that operates on AC power. Furthermore, ECU 140 outputs a control signal to SMR 104 to control an operation of SMR 104.

Furthermore, when battery units 200, 300, 400 are housed in housing portions 106, 108, 110, respectively, the various relays included in battery units 200, 300, 400 are connected to ECU 140 via communication lines.

Thus, ECU 140 outputs a control signal to each of relay CR1-1 and relay CR1-2 of battery unit 200 housed in housing portion 106 to control operations of relay CR1-1 and relay CR1-2. Furthermore, ECU 140 outputs a control signal to each of a relay CR2-1 connected to the positive power supply line of battery unit 300 housed in housing portion 108 and a relay CR2-2 connected to the negative power supply line of battery unit 300 to control operations of relay CR2-1 and relay CR2-2. Furthermore, ECU 140 outputs a control signal to each of a relay CR3-1 connected to the positive power supply line of battery unit 400 housed in housing portion 110 and a relay CR3-2 connected to the negative power supply line of battery unit 400 to control operations of relay CR3-1 and relay CR3-2.

Furthermore, ECU 140 is connected with voltage sensors 150, 152, 154, 156. Thus, ECU 140 obtains voltage V0 detected by voltage sensor 150, voltage V1 detected by voltage sensor 152, voltage V2 detected by voltage sensor 154, and voltage V3 detected by voltage sensor 156.

When receiving a request for system startup, for example, as a startup switch is operated during stop of the system of vehicle 100, ECU 140 controls the operation of each relay such that SMR 104 and the relays of battery units 200, 300, 400 are brought to the conductive state, thereby starting up the system.

Furthermore, when receiving a request to stop the system, for example, as the startup switch is operated during system startup of vehicle 100, ECU 140 controls the operation of each relay such that the relays of SMR 104 and battery units 200, 300, 400 are brought to the interrupt state, thereby stopping the system.

ECU 140 also controls each relay such that the relay is brought to the conductive state when, for example, three mounted battery units 200, 300, 400 are charged using an external power supply (e.g., when a connector is connected to an inlet (not shown) of vehicle 100). Furthermore, ECU 140 controls each relay such that the relay is brought to the interrupt state when, for example, charging of the three mounted battery units 200, 300, 400 is completed.

Particularly if the contact of any of the plurality of relays included in three battery units 200, 300, 400 is welded, vehicle 100 configured as described above may fail to switch from the conductive state to the interrupt state. Thus, ECU 140 can, for example, perform a determination process of determining whether or not welding has occurred for each relay before bringing the respective relays of the three battery units 200, 300, 400 to the interrupt state when shifting the system to the stop state or when external charging is completed.

Specifically, ECU 140 can change the combination of the conductive state and the interrupt state of the respective relays of battery units 200, 300, 400, and determine whether or not welding has occurred in each relay depending on whether or not the detection results of voltage sensors 152, 154, 156 correspond to the changed combination, or determine whether or not welding has occurred in each relay depending on whether or not the detection result of voltage sensor 150 is the detection result corresponding to the changed combination.

Fig. 5 is a timing chart showing an example method of determining welding of each relay. LN1, LN3, LN5 in Fig. 5 indicate changes in the respective states (control history) of relays CR1-1, CR2-1, CR3-1 provided in the positive power supply lines of battery units 200, 300, 400. LN2, LN4, LN6 in Fig. 5 indicate changes in the respective states (control history) of relays CR1-2, CR2-2, CR3-2 provided in the negative power supply lines of battery units 200, 300, 400.

For example, it is assumed that battery units 200, 300, 400 are housed in housing portions 106, 108, 110, and the respective relays of battery units 200, 300, 400 are in the conductive state (on state) and the system of vehicle 100 is in the startup state (vehicle 100 is ready for operation or battery units 200, 300, 400 are ready for external charging).

At a time T(0), for example, when a request is received to bring each relay to the interrupt state, for example, upon completion of external charging or upon receipt of a request to shift the system to the stop state, ECU 140 performs a welding determination process.

When the welding determination process is started, ECU 140 bring all relays CR1-1, CR2-1, CR3-1 of the respective battery units 200, 300, 400 to the interrupt state as indicated by LN1, LN3, LN5 in Fig. 5, and maintains relays CR1-2, CR2-2, CR3-2 of the respective battery units 200, 300, 400 in the conductive state as indicated by LN2, LN4, LN6 in Fig. 5.

ECU 140 then obtains voltages V1, V2, V3 detected by voltage sensors 152, 154, 156. When any of the voltages detected by voltage sensors 152, 154, 156 becomes not less than a threshold (e.g., a value lower than the lower limit of the voltage of the battery unit), ECU 140 determines that welding has occurred in the relay on the positive side of the battery unit, whose voltage not less than the threshold has been detected and which is to be subjected to detection by the voltage sensor.

In contrast, when all the voltages detected by voltage sensors 152, 154, 156 are less than the threshold, ECU 140 determines that no welding has occurred in the relays on the positive side of battery units 200, 300, 400.

When determining at a time T(1) that no welding has occurred in any of relays CR1-1, CR2-1, CR3-1 on the positive side, ECU 140 performs control to bring all relays CR1-1, CR2-1, CR3-1 of battery units 200, 300, 400 to the conductive state and performs control to bring all relays CR1-2, CR2-2, CR3-2 to the interrupt state.

ECU 140 then obtains voltages V1, V2, V3 detected by voltage sensors 152, 154, 156, respectively. For example, when any of the voltages detected by voltage sensors 152, 154, 156 becomes not less than the threshold, ECU 140 determines that welding has occurred in the relay on the negative side of the battery unit, whose voltage not less than the threshold has been detected and which is to be detected by the voltage sensor.

In contrast, when all the voltages detected by voltage sensors 152, 154, 156 are less than the threshold, ECU 140 determines that no welding has occurred in the relays on the negative side of battery units 200, 300, 400.

When determining at a time T(2) that no welding has occurred in all relays CR1-2, CR2-2, CR3-2 on the negative side, ECU 140 performs control to bring all relays CR1-1, CR2 -1, CR3-1 to the interrupt state and maintains relays CR1-2, CR2-2, CR3-2 in the interrupt state. This brings the system of vehicle 100 to the stop state.

The welding determination method is not limited to the method described with reference to Fig. 5. ECU 140 can, for example, determine whether or not each relay has been welded using the detection result of voltage sensor 150.

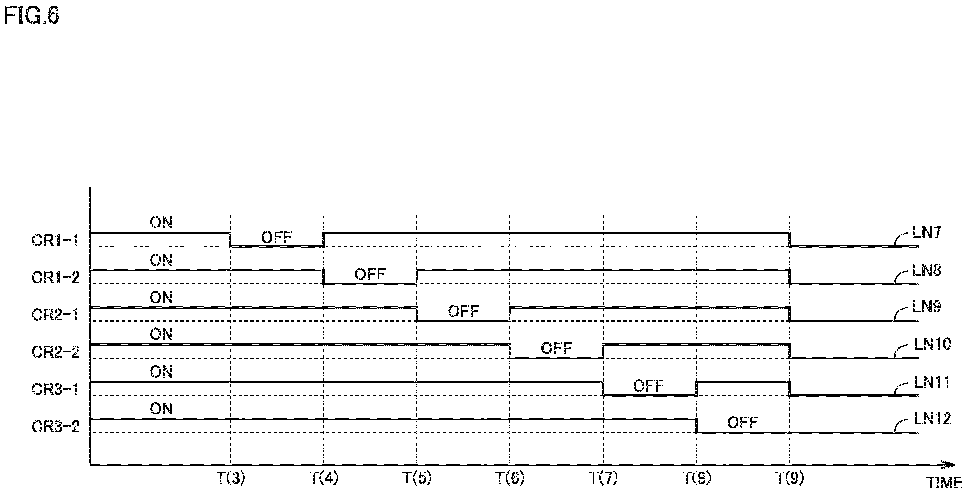

Fig. 6 is a timing chart showing another example of the welding determination method. LN7, LN9, LN11 in Fig. 6 indicate changes in the respective states of relays CR1-1, CR2-1, CR3-1 of battery units 200, 300, 400. LN8, LN10, LN12 in Fig. 6 indicate the changes in the respective states of relays CR1-2, CR2-2, CR3-2 of battery units 200, 300, 400.

For example, it is assumed that battery units 200, 300, 400 are housed in housing portions 106, 108, 110, respectively, and that the respective relays of battery units 200, 300, 400 are in the conductive state (on state) and the system of vehicle 100 is in the startup state.

At a time T(3), for example, when receiving a request to bring each relay to the interrupt state, ECU 140 performs the welding determination process.

When the welding determination process is performed, ECU 140 brings only relay CR1-1 to the interrupt state, as indicated by LN7 in Fig. 6, and maintains the other relays in the conductive state, as indicated by LN8 to LN12 in Fig. 6.

ECU 140 then obtains voltage V0 detected by voltage sensor 150. ECU 140 determines that welding has occurred in relay CR1-1 when voltage V0 detected by voltage sensor 150 becomes not less than the threshold. In contrast, when voltage V0 is less than the threshold, ECU 140 determines that no welding has occurred in relay CR1-1.

When determining at a time T(4) that no welding has occurred in relay CR1-1, ECU 140 brings relay CR1-1 to the conductive state, brings relay CR1-2 to the interrupt state, and maintains the other relays in the conductive state.

When the obtained voltage V0 becomes not less than the threshold, ECU 140 determines that welding has occurred in relay CR1-2. In contrast, when voltage V0 is less than the threshold, ECU 140 determines that no welding has occurred in relay CR1-2.

When determining at a time T(5) that no welding has occurred in relay CR1-2, ECU 140 brings relay CR1-2 to the conductive state, brings relay CR2-1 to the interrupt state, and maintains the other relays in the conductive state.

When the obtained voltage V0 becomes not less than the threshold, ECU 140 determines that welding has occurred in relay CR2-1. In contrast, when voltage V0 is less than the threshold, ECU 140 determines that no welding has occurred in relay CR2-1.

When determining at a time T(6) that no welding has occurred in relay CR2-1, ECU 140 brings relay CR2-1 to the conductive state, brings relay CR2-2 to the interrupt state, and maintains the other relays in the conductive state.

When the obtained voltage V0 becomes not less than the threshold, ECU 140 determines that welding has occurred in relay CR2-2. In contrast, when voltage V0 is less than the threshold, ECU 140 determines that no welding has occurred in relay CR2-2.

When determining at a time T(7) that no welding has occurred in relay CR2-2, ECU 140 brings relay CR2-2 to the conductive state, brings relay CR3-1 to the interrupt state, and maintains the other relays in the conductive state.

When the obtained voltage V0 becomes not less than the threshold, ECU 140 determines that welding has occurred in relay CR3-1. In contrast, when voltage V0 is less than the threshold, ECU 140 determines that no welding has occurred in relay CR3-1.

When determining at a time T(8) that no welding has occurred in relay CR3-1, ECU 140 brings relay CR3-1 to the conductive state, brings relay CR3-2 to the interrupt state, and maintains the other relays in the conductive state.

When the obtained voltage V0 becomes not less than the threshold, ECU 140 determines that welding has occurred in relay CR3-2. In contrast, when voltage V0 is less than the threshold, ECU 140 determines that no welding has occurred in relay CR3-2.

When determining at a time T(9) that no welding has occurred in relay CR3-2, ECU 140 maintains relay CR3-2 in the interrupt state and brings the other relays to the interrupt state.

Description has been given by taking, as an example, the case where the welding determination process described with reference to Figs. 5 and 6 is performed in ECU 140 with battery units 200, 300, 400 mounted in vehicle 100. Alternatively, the welding determination process may be performed using a central processing unit (CPU) of charging rack 120 or charging stand 130, which is capable of controlling each relay of the battery unit and of obtaining the voltage of each battery unit, with battery units 200, 300, 400 housed in charging rack 120.

However, in these welding determination processes, since the relays that are controlled to enter the interrupt state once for determination as to whether or not welding has occurred and then enter the conductive state again, the determination result regarding whether or not the most recent welding has occurred may not be obtained. Furthermore, when the battery unit is removed from vehicle 100, the result of the determination as to whether or not welding has occurred is not associated with the removed battery unit, so the determination as to whether or not welding has occurred may be required again at the destination. This may increase the number of relay operations.

In the present embodiment, thus, battery unit 200 further includes a first notification device 212 that operates, when being supplied with electric power, to allow an operating state to be recognized from outside, and a first supply source 214 that is connected to first notification device 212 and supplies electric power to first notification device 212 when relay CR1-1 is in the conductive state.

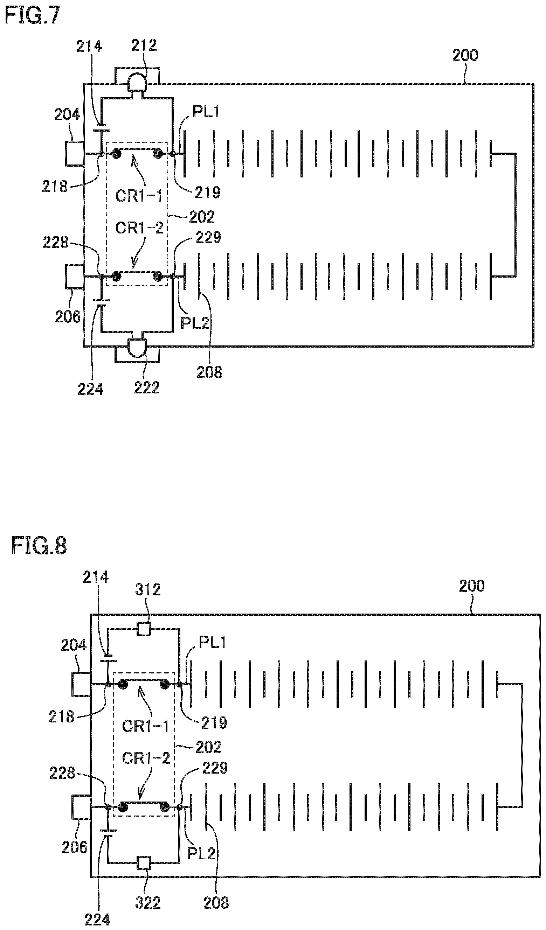

Fig. 7 shows an example configuration of battery unit 200, which is the power supply device according to the present embodiment. As shown in Fig. 7, first notification device 212 is connected in parallel with relay CR1-1 with respect to power supply line PL1 connecting positive connector 204 to cell 208. First supply source 214 is connected in series with first notification device 212.

More specifically, first notification device 212 includes a light emitting device including a light emitting diode (LED) as a light emitting element. The positive terminal of first supply source 214 is connected to a node 218 between positive connector 204 and relay CR1-1 in power supply line PL1. The first supply source is a DC power source composed of, for example, various batteries or capacitors. The negative terminal of first supply source 214 is connected to one end of first notification device 212. The other end of first notification device 212 is connected to a node 219 between relay CR1-1 and cell 208 in power supply line PL1.

Thus, when relay CR1-1 is in the conductive state, a closed circuit is formed by relay CR1-1, first notification device 212, and first supply source 214, and accordingly, electric power is supplied from first supply source 214 to first notification device 212. When electric power is supplied to first notification device 212, the light-emitting element is turned on and the operating state is recognizable from outside. In contrast, when relay CR1-1 is in the interrupt state, the above closed circuit is not formed, and accordingly, electric power is not supplied to first notification device 212, so lighting of the light-emitting element is stopped.

Although first notification device 212 is described as a light emitting device including a light emitting diode as a light emitting element by way of example, the present disclosure is not particularly limited to using the light emitting diode.

Battery unit 200 further includes a second notification device 222 and a second supply source 224. Second notification device 222 and second supply source 224 have the same configurations as those of first notification device 212 and first supply source 214 except that second notification device 222 and second supply source 224 are connected in parallel with relay CR1-2 via nodes 228, 229 with respect to power supply line PL2 connecting negative connector 206 to cell 208. Thus, detailed description thereof will not be repeated.

When battery unit 200 having such a configuration is removed from vehicle 100, for example, with relay CR1-1 and relay CR1-2 controlled to enter the interrupt state, if relay CR1-1 has been welded, a closed circuit is formed by first notification device 212, first supply source 214, and relay CR1-1. Thus, electric power is supplied from first supply source 214 to first notification device 212, and the light emitting element included in first notification device 212 is turned on. This makes it possible to recognize, from outside battery unit 200, that relay CR1-1 has been welded.

In contrast, when relay CR1-2 has been welded, a closed circuit is formed by second notification device 222, second supply source 224, and relay CR1-2. Thus, electric power is supplied from second supply source 224 to second notification device 222, and the light emitting element included in second notification device 222 is turned on. This makes it possible to recognize, from outside battery unit 200, that relay CR1-2 has been welded.

As described above, when battery unit 200, which is the power supply device according to the present embodiment, is removed from vehicle 100, which is an electrical apparatus in which battery unit 200 is mounted, and when relay CR1-1 and CR1-2 are controlled to enter the interrupt state, battery unit 200 can determine that relay CR1-1 has been welded when first notification device 212 is turned on using electric power of first supply source 214 to operate to allow the operating state to be recognized from outside. Alternatively, battery unit 200 can determine that relay CR1-1 has been welded when second notification device 222 is turned on using electric power of second supply source 224 to operate to allow the operating state to be recognized from outside. Thus, the presence or absence of welding can be determined with high accuracy even when battery unit 200 is removed from the apparatus in which battery unit 200 is mounted. Furthermore, it can be determined in which of relays CR1-1, CR1-2, CR2-1, CR2-2, CR3-1, CR3-2 of battery units 200, 300, 400 welding has occurred without performing the welding determination process with reference to Fig. 5 or 6, thus suppressing an increase in the number of relay operations. Thus, a power supply device can be provided that can determine the presence or absence of welding of a relay even when the power supply device is removed from the apparatus in which the power supply device is mounted.

Modifications will be described below.

Although the above embodiment has described that first notification device 212 is turned on when welding has occurred in relay CR1-1, it suffices that first notification device 212 operates to allow relay CR1-1 being in the conductive state to be recognized from outside, and the present disclosure is not particularly limited to the state in which first notification device 212 is turned on. For example, the light emitting element of first notification device 212 may blink when welding has occurred in relay CR1-1, or may be turned on in such a manner that the color of the emitted light changes over time.

Although the above embodiment has described that first notification device 212 and second notification device 222 have the same configuration, for example, first notification device 212 and second notification device 222 may report the occurrence of welding in different ways. For example, first notification device 212 may be turned on in a different color from that of second notification device 222, or first notification device 212 may include a light emitting device and second notification device 222 may include a sound generating device. Thus, the welded relay can be reliably identified.

Although the above embodiment has described, by way of example, the case in which both first notification device 212 and second notification device 222 include a light emitting device including a light emitting diode as a light emitting element, the present disclosure is not particularly limited to including a light emitting device. For example, a notification device may include a sound-generating device such as a buzzer.

Fig. 8 shows an example configuration of battery unit 200, which is a power supply device according to a modification. Battery unit 200 shown in Fig. 8 differs from battery unit 200 shown in Fig. 7 in that it includes a third notification device 312 instead of first notification device 212 and a fourth notification device 322 instead of second notification device 222. The other components are the same as those of battery unit 200 shown in Fig. 7.

Third notification device 312 includes a sound generating device including a buzzer or the like. It suffices that the sound generating device is any device that generates a sound when DC power is supplied, and is not limited to generating a buzzing sound, for example. The sound generating device may be, for example, a device that generates voice or the like. One end of third notification device 312 is connected to the negative terminal of first supply source 214. The other end of third notification device 312 is connected to node 219 between relay CR1-1 and cell 208 in power supply line PL1.

Thus, when relay CR1-1 is in the conductive state, a closed circuit is formed by relay CR1-1, third notification device 312, and first supply source 214, and accordingly, electric power is supplied from first supply source 214 to third notification device 312. When electric power is supplied to third notification device 312, a sound will be generated from the buzzer device, allowing the operating state to be recognized from outside. In contrast, when relay CR1-1 is in the interrupt state, the above closed circuit is not formed, and accordingly, electric power is not supplied to third notification device 312. Thus, a sound will not be generated from the buzzer device.

Fourth notification device 322 in the present modification has the same configuration as that of third notification device 312, except that it is connected in parallel with relay CR1-2 via nodes 228, 229 with respect to power supply line PL2 together with second supply source 224. Thus, detailed description thereof will not be repeated.

When battery unit 200 having such a configuration is removed from vehicle 100, for example, with relay CR1-1 and relay CR1-2 controlled to enter the interrupt state, a closed circuit is formed by third notification device 312, first supply source 214, and relay CR1-1 when relay CR1-1 has been welded. Thus, electric power is supplied from first supply source 214 to third notification device 312, and a sound will be generated from the sound generating device included in third notification device 312. As a result, it can be recognized from outside battery unit 200 that relay CR1-1 has been welded.

In contrast, when relay CR1-2 has been welded, a closed circuit is formed by fourth notification device 322, second supply source 224, and relay CR1-2. Thus, electric power is supplied from second supply source 224 to fourth notification device 322, and a sound will be generated from the sound generating device included in fourth notification device 322. As a result, it can be recognized from outside battery unit 200 that relay CR1-2 has been welded.

Although the present modification has described that a sound is generated from third notification device 312 when welding has occurred in relay CR1-1, it suffices that third notification device 312 operates to allow relay CR1-1 being in the conductive state to be recognized from outside, and how to generate a sound is not particularly limited. For example, third notification device 312 may intermittently generate a sound when welding has occurred in relay CR1-1, or a sound may be generated in a manner in which the tone and volume change over time.

Although the present modification has described that third notification device 312 and fourth notification device 322 have the same configuration, third notification device 312 and fourth notification device 322 may report the occurrence of welding in different ways. For example, third notification device 312 may have a different volume, tone, sound generation interval, or voice content from that of fourth notification device 322. Consequently, the welded relay can be reliably identified.

The modifications described above may be implemented as appropriate in whole or in part in any combination.

Although the embodiments of the present disclosure have been described, it should be understood that the embodiments disclosed herein are illustrative and non-restrictive in every respect. The scope of the present disclosure is defined by the terms of the claims and is intended to include any modifications within the scope and meaning equivalent to the terms of the claims.

## Claims

1. A power supply device comprising:
a connecting portion (204) electrically connectable to an electrical apparatus (100) in which the power supply device is mounted;
a power storage device (208) that allows supply of electric power to the electrical apparatus (100);
a relay (CR1-1) that switches between
a conductive state in which a power supply line between the connecting portion (204) and the power storage device (208) is electrically connected, and
an interrupt state in which the power supply line is electrically interrupted;
a notification device (212, 312) that operates, when being supplied with electric power, to allow the conductive state to be recognized from outside; and
a supply source (214) that allows supply of electric power to the notification device (212, 312) when the supply source (214) is connected to the notification device (212, 312) and the relay (CR1-1) is in the conductive state.

2. The power supply device according to claim 1, wherein
the notification device (212, 312) and the supply source (214) are connected in parallel with the relay (CR1-1) with respect to the power supply line, and
when the relay (CR1-1) is in the conductive state, the notification device (212, 312), the supply source (214), and the relay (CR1-1) form a closed circuit, and the supply source (214) supplies electric power to the notification device (212, 312).

3. The power supply device according to claim 1, wherein the notification device (212) includes a light emitting device that emits light in the conductive state.

4. The power supply device according to claim 1, wherein the notification device (312) includes a sound generating device that generates a sound in the conductive state.
